# DEMANDE DE BREVET EUROPEEN

(11) **EP 2 053 833 A1**
(43) Date de publication de la demande: **29.04.2009**
(21) Numéro de dépôt: 08167092.9
(22) Date de dépôt: 21.10.2008
(51) Int. Cl.: H04L 29/12

(54) **Procédé de traduction d'entête de paquets de données**

(30) Priorité: 23.10.2007 FR 0758516; 26.06.2008 FR 0854299
(71) Demandeur: FRANCE TELECOM, 75015 Paris (FR)
(72) Inventeur: Andaloussi, Adil, 75018, PARIS (FR); Achemlal, Mohammed, 14000, CAEN (FR); Catros, Vincent, 22700, LOUANNEC (FR); Minodier, David, 22300, LANNION (FR)

(57) **Abrégé**

Procédé de traduction d'entêtes de paquets relatifs à une session à laquelle participe un terminal (T1-T4) appartenant à un premier réseau (R1), un premier entête comprenant une adresse dans le premier réseau du terminal étant traduit en un deuxième entête comprenant une adresse dans un deuxième réseau (R2) et un identifiant de session associés à la session,
**caractérisé en ce que** ledit procédé comprend en outre :
- une étape de détermination de l'identifiant de session à lui associer à partir de l'adresse dans le premier réseau du terminal, par application d'une fonction de traduction injective à l'adresse du terminal dans le premier réseau.

## Description

L'invention concerne une technique de traduction d'entêtes de paquets relatifs à une session de communication à laquelle participe un terminal.

Pour se connecter à un réseau conformément au protocole Internet, un client doit disposer d'une adresse dans ce réseau, dite adresse publique ; cette adresse doit permettre de l'identifier d'une manière unique afin de lui acheminer le trafic qui lui est destiné.

Un Fournisseur d'Accès à Internet ou FAI fournit à un client une connectivité au réseau et lui attribue une adresse IP publique. Il peut être amené à mémoriser l'adresse attribuée à un client ainsi que des informations temporelles liées à cette attribution. Par exemple, lorsqu'un client X s'authentifie auprès d'un fournisseur d'accès à Internet et obtient une adresse A, le fournisseur d'accès peut mémoriser l'association entre un identifiant du client X et l'adresse A qui lui a été attribuée ainsi que la date et l'heure de début et de fin de connexion du client.

La conservation de ces informations est, dans certains pays, une obligation légale qui permet à l'autorité judiciaire d'identifier la provenance d'un paquet de données IP, par exemple lors d'une enquête judiciaire. L'adresse source de ce paquet de données IP et la date de la transaction permettent au fournisseur d'accès d'identifier le client, origine du paquet, grâce aux informations conservées. Ces informations doivent être conservées pendant une durée importante, par exemple d'un an.

Actuellement, une adresse unique publique dans la version 4 du protocole Internet, notée IPv4, est attribuée au client. Le nombre d'adresses publiques de type IPv4 est limité.

Compte tenu du développement des communications au travers du réseau Internet, un grand nombre de ces adresses IP de type IPv4 ont déjà été attribuées et on s'achemine vers une pénurie d'adresses IP de type IPv4.

Une première solution s'appuie sur l'utilisation d'un mécanisme appelé mécanisme NAPT, pour "*Network Address and Port Translation*". Le mécanisme NAPT est défini dans un document de l'IETF (groupe de standardisation de l'Internet, abréviation des termes anglais *Internet Engineering Task Force),* référencé RFC 2663 (RFC signifiant "requête pour commentaires", ou en anglais *Request For Comments).*

Dans une telle solution, le mécanisme NAPT est mis en oeuvre dans un dispositif de traduction placé en coupure entre deux réseaux, par exemple entre un premier réseau, dit réseau privé, et un deuxième réseau, dit réseau public, correspondant au réseau Internet. Un tel dispositif de traduction est identifié dans le réseau public par une unique adresse IP publique.

Dans le réseau privé, chaque client se voit attribuer une adresse IP privée qui permet de l'identifier de manière unique auprès du dispositif de traduction. Une telle adresse IP privée est choisie parmi un intervalle d'adresses IP de type IPv4 réservé à un usage privé uniquement. Un tel intervalle est défini dans le document de l'IETF référencé RFC 1918. En conséquence, ces adresses IP privées ne sont pas utilisables pour identifier un client dans le réseau public et ne doivent pas être utilisées dans ce réseau. En effet, deux clients appartenant à deux réseaux privés différents peuvent se voir attribuer une même adresse IP privée.

Lorsqu'un client émet un paquet de données IP à destination du réseau public, le dispositif de traduction remplace l'adresse IP privée du client par sa propre adresse IP publique de sorte que, vu du réseau public, tout se passe comme si l'émetteur du paquet de données IP était le dispositif de traduction et non pas le client. Ainsi, dans le réseau public, tous les clients du réseau privés ont la même adresse IP à savoir l'adresse IP publique du dispositif de traduction.

Afin de différencier les différents clients connectés au dispositif de traduction, on s'appuie également sur les ports de la couche transport, TCP "*Transmission Control Protocol*" ou UDP "*User Datagram Protocol*". L'affectation des ports à une adresse IP privée est non déterministe et un même port peut être affecté à différents clients successivement au cours du temps.

Par ailleurs, une deuxième solution consiste en une nouvelle version du protocole Internet, dite IPv6, prévue, afin de pallier, entre autres, l'épuisement du nombre d'adresses publiques de type IPv4. Le fournisseur d'accès peut ainsi attribuer une adresse IPv6 ou déléguer un préfixe IPv6 au lieu d'une adresse IPv4 pour ses nouveaux clients. Le fournisseur d'accès doit mettre à disposition des clients auxquels il a attribué une adresse IPv6 une fonction de translation de protocole du type IPv6 vers le type IPv4 et réciproquement afin de leur permettre de se connecter au réseau Internet de type IPv4.

Le mécanisme NAT-PT, pour "Network Address Translation + Protocol Translation", tel que défini dans la RFC 2766 de l'IETF, permet de traduire le trafic conforme au protocole IPv6 en trafic conforme au protocole IPv4 et réciproquement. Une variante de ce mécanisme, appelée NAPT-PT pour "Network Address Port Translation + Protocol Translation", permet à plusieurs clients IPv6 de communiquer avec le réseau IPv4 en utilisant une seule adresse publique IPv4 en s'appuyant sur les ports de la couche transport, TCP ou UDP, afin de différencier les adresses sources translatées ou traduites. L'affectation des ports est aléatoire et un même port peut être affecté à différents clients successivement au cours du temps.

Ces deux solutions posent un problème de traçabilité lors de leur mise en oeuvre dans le réseau du fournisseur d'accès. En effet, à partir du moment où le trafic d'une pluralité de clients est traduit vers une seule adresse IPv4 publique, le fournisseur d'accès est dans l'incapacité de retrouver, à partir d'une adresse dans le réseau IPv4, un identifiant d'un des clients de la pluralité ayant émis un paquet de données IP.

Ainsi, pour la première solution, lorsqu'une autorité judiciaire demande au fournisseur d'accès d'identifier un client émetteur d'un paquet IP donné, le fournisseur d'accès est dans l'incapacité de déterminer l'adresse privée du client et donc dans l'incapacité de remplir son obligation légale.

Pour la deuxième solution, le fournisseur d'accès peut également mémoriser les informations relatives aux sessions traduites par un dispositif mettant en oeuvre le mécanisme NAPT-PT. Dans ce cas, lorsqu'une autorité judiciaire demande au fournisseur d'accès d'identifier un client émetteur d'un paquet IP donné, le fournisseur d'accès peut le déterminer en consultant dans un premier temps la base des sessions traduites, à l'aide de l'information relative au port source utilisé dans le paquet de données IP. Ceci lui permet de déterminer une adresse ou un préfixe IPv6 délégué au client, puis dans un deuxième temps l'identifiant du client.

Cependant, cette procédure requiert la mémorisation de l'ensemble des informations relatives aux traductions de sessions pendant une durée importante, typiquement d'un an. Compte-tenu du nombre de clients d'un fournisseur d'accès et du nombre de sessions gérées par un dispositif mettant en oeuvre le mécanisme NAPT-PT, le volume des informations mémorisées est très important.

Un des buts de l'invention est de remédier à des insuffisances/inconvénients de l'état de la technique et/ou d'y apporter des améliorations.

L'invention a pour objet un procédé de traduction d'entêtes de paquets relatifs à une session à laquelle participe un terminal appartenant à un premier réseau, un premier entête comprenant une adresse dans le premier réseau du terminal étant traduit en un deuxième entête comprenant une adresse dans un deuxième réseau et un identifiant de session associés à la session,
caractérisé en ce que ledit procédé comprend en outre :
- une étape de détermination de l'identifiant de session à lui associer à partir de l'adresse dans le premier réseau du terminal, par application d'une fonction de traduction injective à l'adresse du terminal dans le premier réseau.

L'identifiant à associer à la session est déterminé par application d'une fonction de traduction injective, ou réversible appliquée à une adresse du terminal dans le premier réseau. Autrement dit, l'identifiant à associer à la session est déterminé à partir de l'adresse dans le premier réseau du terminal. Ainsi les entêtes des paquets émis par le terminal et comprenant son adresse dans le premier réseau sont traduits en des entêtes comprenant une adresse dans un deuxième réseau et un identifiant de session donné. L'affectation d'un identifiant de session à un terminal n'est donc pas aléatoire mais fonction de l'adresse du terminal dans le premier réseau contrairement à l'état de l'art.

A partir d'un tel paquet issu de la traduction, il est possible de déterminer l'adresse dans le premier réseau du terminal qui a émis le paquet. En effet, un paquet intercepté sur le deuxième réseau contient dans son entête une adresse dans le deuxième réseau permettant d'identifier de manière unique le dispositif de traduction, et donc le premier réseau situé en amont de ce dispositif. Il comprend par ailleurs un identifiant de session, dont on peut déduire, par application de la fonction de traduction injective inverse, l'adresse dans ce premier réseau du terminal participant à la session.

On rappelle en effet que, du fait du caractère injectif de la fonction de traduction, il existe une unique adresse dans le premier réseau ayant pour image par cette fonction de traduction, un identifiant de session donné.

L'adresse dans le deuxième réseau et l'identifiant de session permettent donc d'identifier le terminal de façon unique par application de la fonction de traduction, sans avoir recours à une mémorisation de l'ensemble des sessions qui ont fait l'objet de la traduction au cours du temps. Ceci permet donc de satisfaire les obligations légales d'un opérateur sans requérir d'espace de mémorisation important. Seule une mémorisation temporaire, c'est-à-dire tant que la session est en cours, et une mémorisation de la fonction de traduction sont nécessaires.

Une application correspond par exemple à un service, tel que le service web. Ainsi quand le terminal participe à une session relative à une application telle que le service web, le terminal a requis l'établissement d'une connexion à un serveur web et échange des données au travers de cette connexion.

Ainsi, l'invention propose une technique permettant d'identifier un client dont les paquets ont été traduits par un dispositif de traduction à partir des informations d'un des paquets de données traduits.

L'invention concerne également un procédé de traduction d'entêtes de paquets relatifs à une session à laquelle participe un terminal, ledit terminal appartenant à un premier réseau et ayant une adresse dans ce premier réseau, le procédé comprenant une étape de traduction d'entêtes de paquets relatifs à la session, dans laquelle un premier entête comprenant l'adresse dans le premier réseau du terminal est traduit en un deuxième entête comprenant une adresse dans un deuxième réseau et un identifiant de session associés à la session, et réciproquement, dans lequel, sur réception d'un paquet initiant ladite session, le procédé de traduction comprend une étape de détermination de l'identifiant de session à lui associer à partir de l'adresse dans le premier réseau du terminal, l'adresse dans le deuxième réseau et ledit identifiant de session ainsi déterminé permettant d'identifier de façon unique l'adresse du terminal dans le premier réseau.

Selon une particularité du procédé objet de l'invention, l'adresse du terminal dans le premier réseau étant exprimée en langage binaire, l'identifiant de session est déterminé en fonction de la valeur de bits de poids faible de l'adresse du terminal dans le premier réseau.

Dans le premier réseau, les différentes adresses associées aux terminaux se distinguent par leurs bits de poids faible, les bits de poids fort étant les mêmes pour toutes les adresses du premier réseau. En déterminant l'identifiant de session au moyen de la valeur des bits de poids faibles de l'adresse d'un terminal dans le premier réseau, on s'assure de pouvoir identifier de manière unique ce terminal de manière simple.

Selon une autre particularité du procédé objet de l'invention, la fonction de traduction associe à l'adresse du terminal dans le premier réseau un identifiant de session dont la valeur de bits de poids faible est identique à la valeur de bits de poids faible de l'adresse du terminal dans le premier réseau.

Ainsi, les identifiants de session sont attribués de manière cyclique aux différents terminaux en fonction de la valeur des bits de poids faible des adresses des terminaux dans le premier réseau.

Selon une autre particularité du procédé objet de l'invention, la fonction de traduction associe à l'adresse du terminal dans le premier réseau un identifiant de session dont la valeur de bits de poids fort est identique à la valeur de bits de poids faible de l'adresse du terminal dans le premier réseau.

Ainsi, cela revient à attribuer un ensemble d'identifiants de session consécutifs à chaque terminal.

Selon une autre particularité du procédé objet de l'invention, l'étape de détermination de l'identifiant de session est effectuée sur réception d'un paquet initiant ladite session, l'adresse du terminal dans le premier réseau comportant une information identifiant un groupe d'identifiants de session susceptibles d'être associés à une session initiée par ledit terminal, l'identifiant de session à associer à la session considérée est sélectionné dans le groupe.

Ainsi, à partir d'un paquet intercepté dans le deuxième réseau, comprenant une adresse dans le deuxième réseau et un identifiant de session donné, il est possible de déterminer le groupe d'identifiants de session susceptibles d'être associés à une session initiée par le terminal, auquel appartient l'identifiant de session donné et d'identifier ainsi le terminal associé.

En outre, le premier réseau est un réseau de type IPv6 et le deuxième réseau est un réseau de type IPv4.

Ce procédé est particulièrement bien adapté à la traduction d'entêtes de paquets dans le premier réseau de type IPv6 en des entêtes de paquets dans le deuxième réseau de type IPv4 et réciproquement.

De plus, un sous-ensemble de bits est prélevé dans l'ensemble des bits réservés à l'encodage de l'adresse dans le premier réseau, pour porter l'information identifiant le groupe d'identifiants de session susceptibles d'être associés à la session.

Ainsi, l'information identifiant le groupe d'identifiants de session est comprise dans le champ réservé normalement à l'encodage de l'adresse dans le premier réseau. La structure des entêtes n'est pas modifiée pour porter cette information supplémentaire.

L'invention concerne également un dispositif de traduction d'entêtes de paquets relatifs à une session à laquelle participe un terminal appartenant à un premier réseau, le dispositif comprenant des moyens de traduction d'entêtes de paquets relatifs à une session du terminal, agencés pour traduire un premier entête comprenant une adresse dans le premier réseau du terminal en un deuxième entête comprenant une adresse dans un deuxième réseau et un identifiant de session associés à la session, et réciproquement,
caractérisé en ce que ledit dispositif comprend en outre :
- des moyens de détermination de l'identifiant de session à associer à une session du terminal à partir de l'adresse dans le premier réseau du terminal, par application d'une fonction de traduction injective à l'adresse du terminal dans le premier réseau.

L'invention concerne également un équipement réalisant une interface entre un premier et un deuxième réseau de télécommunication,
caractérisé en ce qu'il comporte un dispositif de traduction d'entêtes de paquets transmis au cours d'une session à laquelle participe un terminal appartenant au premier réseau, le dispositif comprenant des moyens de traduction d'un premier entête comprenant une adresse du terminal dans le premier réseau en un deuxième entête comprenant une adresse dans le deuxième réseau et un identifiant de session, et des moyens de détermination de l'identifiant de session par application à l'adresse du terminal dans le premier réseau d'une fonction de traduction injective.

Un tel équipement consiste par exemple en un multiplexeur numérique de ligne d'abonnés ou DSLAM, une terminaison optique de ligne ou OLT ou encore un routeur de collecte disposé à la frontière entre le réseau de collecte et le réseau coeur.

L'invention concerne en outre un système de communication comprenant un dispositif de traduction tel que décrit ci-dessus et au moins un terminal.

L'invention concerne également un programme d'ordinateur, caractérisé en ce qu'il comprend des instructions de code de programme pour la mise en oeuvre des étapes du procédé de traduction tel que décrit précédemment lorsque le programme est exécuté par un processeur et un support d'enregistrement lisible par un dispositif de traduction sur lequel est enregistré ce programme.

L'invention concerne en outre un signal émis par un terminal appartenant à un premier réseau vers un destinataire dans un deuxième réseau et véhiculant un paquet comprenant une adresse du terminal dans le premier réseau, ladite adresse portant une information identifiant un groupe d'identifiants de session susceptibles d'être associés à une session initiée par ledit terminal et apte à être utilisée par un dispositif de traduction pour sélectionner dans le groupe, lors de l'initialisation d'une session, un identifiant de session à associer à la session.

L'invention sera mieux comprise à l'aide de la description suivante de modes de réalisation particuliers du procédé de l'invention, en référence aux dessins annexés sur lesquels :
- la figure 1 représente un dispositif de traduction dans son environnement selon un premier mode particulier de réalisation de l'invention ;
- la figure 2 représente les étapes du procédé de traduction selon le premier mode particulier de réalisation de l'invention ;
- la figure 3 représente un dispositif de traduction dans son environnement selon un deuxième mode particulier de réalisation de l'invention;
- la figure 4 représente les étapes du procédé de traduction selon le deuxième mode particulier de réalisation de l'invention ;
- la figure 5 représente un paquet relatif à une session et la figure 6 représente un champ de ce paquet comprenant une adresse dans un premier réseau selon un mode particulier de réalisation de l'invention ;
- la figure 7 représente un dispositif de traduction selon un mode particulier de réalisation de l'invention.

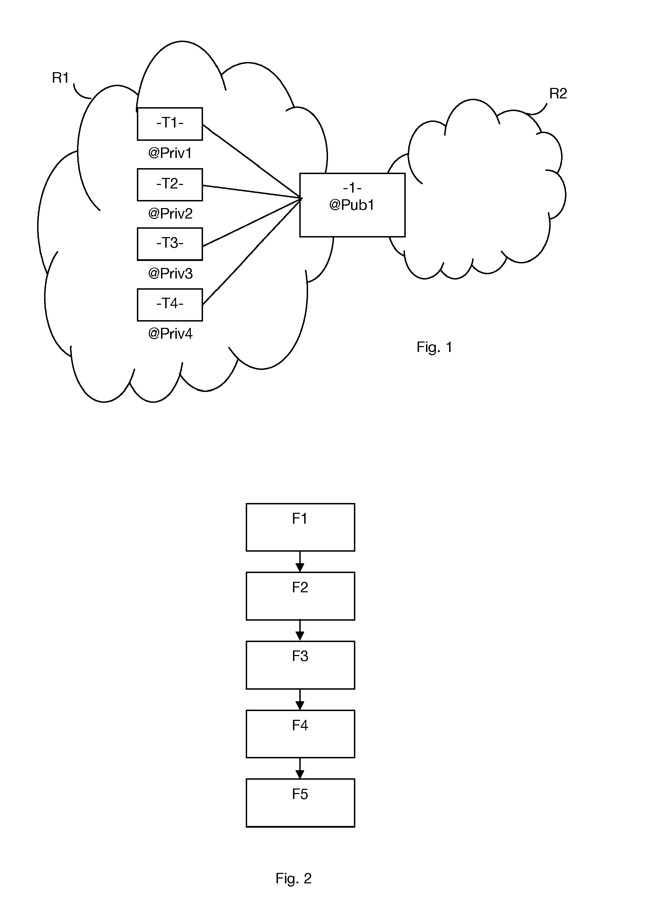

On représente en référence à la figure 1 un dispositif 1 de traduction d'entêtes de paquets de données dans son environnement selon un premier mode de réalisation de l'invention.

Un tel dispositif 1 de traduction d'entêtes de paquets est disposé en interface d'un premier réseau de télécommunication R1 et d'un deuxième réseau de télécommunication R2. Une pluralité de terminaux de télécommunication T1, T2, T3, T4 sont connectés au dispositif 1 de traduction d'entêtes de paquets par des liaisons filaires (câble à paire de cuivre ou fibre optique) ou radio. Ces différents terminaux T1, T2, T3, T4 appartiennent au premier réseau R1. De tels terminaux sont par exemple des passerelles domestiques, des passerelles d'entreprise, des Set Top Box, des ordinateurs tels que des PC, ou encore des routeurs.

Le premier réseau R1 est appelé dans la suite du document réseau privé R1. Dans le réseau privé R1, les différents terminaux sont identifiés de manière unique par une adresse IP privée. Ainsi, le terminal T1 est identifié par l'adresse @Priv1, le terminal T2 est identifié par l'adresse IP @Priv2, le terminal T3 par l'adresse IP @Priv3 et le terminal T4 par l'adresse IP privée @Priv4. De telles adresses IP privées ne peuvent être utilisées pour identifier les différents terminaux T1, T2, T3 et T4 que lors d'échanges de paquets de données au sein du réseau privé R1.

Le deuxième réseau R2 correspond par exemple au réseau Internet et est appelé dans la suite du document réseau public R2. Le dispositif 1 de traduction d'entêtes est identifié de manière unique dans le réseau public R2 au moyen d'une adresse IP publique @Pub1. En langage binaire, une adresse IP, qu'elle soit privée ou publique est codée sur 32 bits lorsqu'elle est conforme à la version 4 du protocole IP.

Lorsqu'un terminal, T1, T2, T3, T4 appartenant au réseau privé R1 échange des données au travers du réseau public R2, par exemple avec un terminal distant appartenant au réseau public R2 ou à un autre réseau privé au travers du réseau public R2, il ne peut être identifié au moyen de son adresse IP privée @Priv1 @Priv2, @Priv3, @Priv4, l'utilisation de cette adresse privée étant limitée au réseau privé R1. Afin de pouvoir communiquer avec un terminal distant au travers du réseau public R2, une adresse IP publique doit être assignée au terminal T1, T2, T3, T4.

Dans une telle situation, lorsqu'un terminal T1, T2, T3 ou T4 émet un paquet de données IP à destination du réseau public R2, le dispositif 1 de traduction remplace l'adresse IP privée du client, @Priv1, @Priv2, @Priv3, @Priv4, par sa propre adresse IP publique @Pub1 de sorte que, vu du réseau public R2, tout se passe comme si le terminal émetteur du paquet de données IP était le dispositif 1 de traduction et non pas le terminal T1, T2, T3, T4.

Le dispositif 1 de traduction permet donc, en mettant en oeuvre le mécanisme NAPT, de mutualiser une adresse IP publique @Pub1 entre plusieurs adresses IP privées @Priv1, @Priv2, @Priv3, @Priv4 identifiant chacune un terminal distinct.

Afin de résoudre les problèmes de traçabilité liés à la mutualisation d'une adresse IP publique @Pub1 entre une pluralité d'adresses privées @Priv1, @Priv2, @Priv3, @Priv4, il est nécessaire de disposer d'informations relatives aux applications demandées par les différents terminaux T1, T2, T3, T4 et traduites par le dispositif 1 de traduction d'entête. Dans le cadre du protocole IP version 4, afin de différencier les adresses IP publiques traduites on s'appuie sur les ports, ou identifiants de session, de la couche transport du dispositif 1 de traduction. En langage binaire, un identifiant de session est codé sur 16 bits.

Ainsi, connaissant l'adresse IP publique @Pub1 et un numéro d'identifiant de session, il est possible d'identifier de manière unique le terminal T1, T2, T3, T4 appartenant au réseau privé R1 émettant ou recevant un paquet de données.

L'invention permet de déterminer, pour chaque terminal T1, T2, T3, T4 appartenant au réseau privé R1, un ensemble d'identifiants de sessions à utiliser lors de sessions avec un terminal distant relatives à une application demandée, par application d'une fonction de traduction à l'adresse IP privée du terminal participant à la session.

Dans un mode de réalisation de l'invention, l'ensemble des identifiants de sessions alloués à un même terminal du réseau privé R1 est déterminé en fonction de la valeur des bits de poids faible de l'adresse IP privée du terminal considéré. Le nombre de bits de poids faible à prendre en considération pour déterminer les identifiants de session est fonction du nombre de terminaux appartenant au réseau privé R1 se partageant la même adresse IP publique@Pub1. Ainsi si 2^{N} terminaux se partagent une même adresse IP publique, on prend en compte les N bits de poids faible de l'adresse IP privée @Priv1, @Priv2, @Priv3, @Priv4 de chaque terminal T1, T2, T3, T4 appartenant au réseau privé R1 pour déterminer l'ensemble des identifiants de sessions à associer à chaque terminal T1, T2, T3, T4.

Dans l'exemple considéré, N valant 2, seuls les deux bits de poids faible des adresses privées des terminaux T1, T2, T3, T4 sont pris en compte pour déterminer les identifiants de sessions à associer à chacun des terminaux.

Ainsi, la fonction de traduction est une fonction injective qui permet d'associer à une adresse IP privée un unique couple (adresse IP publique, identifiant de session).

Dans un mode de réalisation de l'invention, la fonction de traduction associe à chaque terminal T1, T2, T3, T4 un ensemble d'identifiants de sessions ayant une valeur des N bits de poids faible identique à la valeur des N bits de poids faible des adresses IP privées des différents terminaux.

Dans l'exemple considéré, les 2 bits de poids faible de l'adresse @Priv1 du terminal T1 ont pour valeur 0, ceux de l'adresse @Priv2 du terminal T2 ont pour valeur 1, ceux de l'adresse @Priv3 du terminal T3 ont pour valeur 2 et ceux de l'adresse @Priv4 du terminal T4 ont pour valeur 3.

La fonction de traduction associe au terminal T1 l'ensemble des identifiants de sessions dont le reste de la division par 4 vaut zéro, c'est-à-dire que les des 2 bits de poids faible de cet identifiant de session valent respectivement 0 et 0. La fonction de traduction associe à l'adresse privée du terminal T2 l'ensemble des identifiants de sessions dont le reste de la division par 4 vaut 1, c'est-à-dire que les deux bits de poids faible valent respectivement 0 et 1. La fonction de traduction associe au terminal T3 l'ensemble des identifiants de sessions dont le reste de la division par 4 vaut 2, c'est-à-dire que les deux bits de poids faible valent respectivement 1 et 0. Enfin, la fonction de traduction associe au terminal T4 l'ensemble des identifiants de sessions dont le reste de la division par 4 vaut 3, c'est-à-dire que les deux bits de poids faible valent respectivement 1 et 1.

On voit que dans ce mode de réalisation les identifiants de sessions sont associés de manière cyclique aux différents terminaux appartenant au réseau privé R1, avec une période de 2^{N} = 4.

Dans un autre mode de réalisation de l'invention, la fonction de traduction associe à chaque terminal T1, T2, T3, T4 un ensemble d'identifiants de sessions ayant une valeur des N bits de poids fort identique à la valeur des N bits de poids faible des adresses IP privées des différents terminaux.

La fonction de traduction associe au terminal T1 l'ensemble des identifiants de sessions pour lesquels le quotient de la division de la valeur de l'identifiant par 2^{(16-N)} est égal à 0. La fonction de traduction associe à l'adresse privée du terminal T2 l'ensemble des identifiants de sessions pour lesquels le quotient de la division de la valeur de l'identifiant par 2^{(16-N)} est égal à 1. La fonction de traduction associe au terminal T3 l'ensemble des identifiants de sessions pour lesquels le quotient de la division de la valeur de l'identifiant par 2^{(16-N)} est égal à 2. Enfin, la fonction de traduction associe au terminal T4 l'ensemble des identifiants de sessions pour lesquels le quotient de la division de la valeur de l'identifiant par 2^{(16-N)} est égal à 3.

Ainsi, cela revient à attribuer un ensemble d'identifiants de sessions consécutifs à chaque terminal du réseau privé R1.

Lorsqu'on intercepte un paquet de données en provenance, par exemple, du réseau public R2 à destination du réseau privé R1, il est possible de retrouver l'adresse du terminal destinataire dans le réseau privé R1 à partir de l'adresse publique @Pub1, de l'identifiant de session utilisé et par application de la fonction de traduction. Pour cela, le dispositif 1 de traduction lit l'adresse IP publique et l'identifiant de session dans l'entête du paquet reçu. Puis le dispositif 1 de traduction applique la fonction de traduction au couple (adresse IP publique, identifiant de session) afin de déterminer à partir de ces informations l'adresse du terminal appartenant au réseau privé R1 destinataire du paquet de données reçu.

Ainsi, la solution objet de l'invention ne nécessite pas de mémoriser le contexte de traduction c'est-à-dire par exemple un triplet (adresse privée, adresse publique, identifiant de session) dans une table de traduction. La simple connaissance de la fonction de traduction permet à partir d'une adresse publique et d'un identifiant de session d'identifier de manière unique un terminal participant à une session relative à une application.

Le procédé de traduction, tel qu'il est mis en oeuvre par le dispositif 1 de traduction d'entête de paquets de données dans le premier mode de réalisation, va maintenant être décrit en référence à la figure 2.

Au cours d'une étape F1, le dispositif 1 de traduction reçoit un paquet de données en provenance du réseau privé R1.

Au cours d'une étape F2, le dispositif 1 de traduction lit l'adresse IP privée dans l'entête du paquet reçu afin d'en extraire, selon le mode de réalisation de l'invention mis en oeuvre, la valeur des bits de poids faible.

Au cours d'une étape F3, le dispositif 1 de traduction détermine par application de la fonction de traduction aux bits de poids faible ainsi extraits, afin de déterminer, au cours d'une étape F4, l'identifiant de session à utiliser lors de sessions avec un terminal distant relatives à l'application demandée.

Une fois l'identifiant de session déterminé, le dispositif de traduction 1 émet au cours d'une étape F5, le paquet de données dans le réseau public R1. Le paquet de données ainsi émis comporte dans son entête l'adresse IP @Pub1 du dispositif de traduction et l'identifiant de session déterminé.

Une fois le terminal destinataire déterminé, le dispositif 1 de traduction transmet le paquet de données.

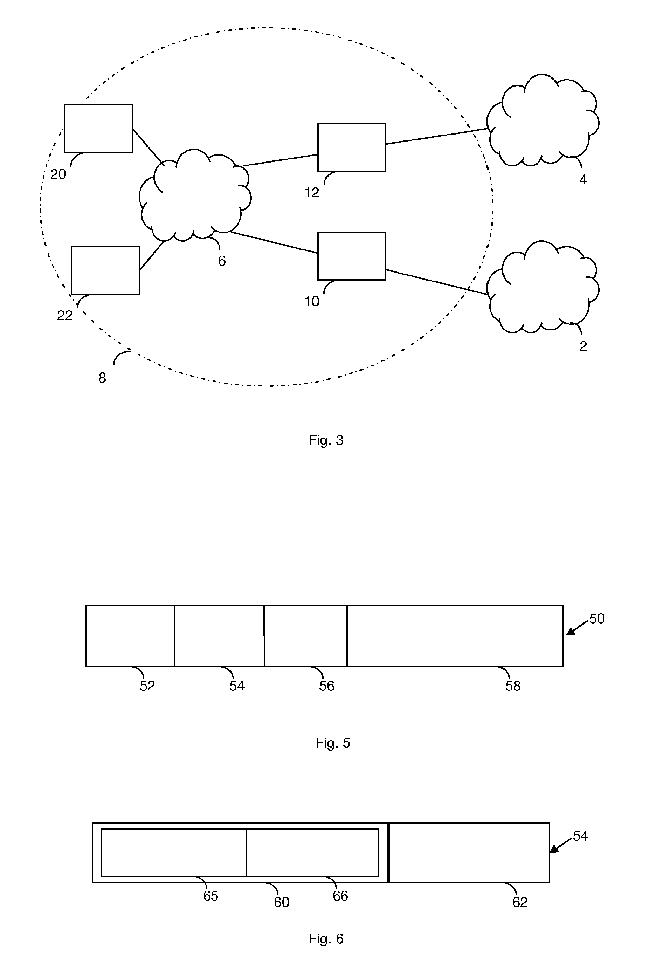

Sur la figure 3 est représenté un dispositif 10 de traduction dans son environnement dans un deuxième mode de réalisation. Ce dispositif 10 de traduction s'interface entre un premier réseau 6, par exemple local, de type IPv6 et un deuxième réseau 2 de type IPv4. Des terminaux 20 et 22 sont raccordés au premier réseau 6 et possèdent chacun une adresse dans le premier réseau 6. Les paquets émis par les terminaux 20, 22 vers un destinataire dans un troisième réseau 4 de type IPv6 sont acheminés par l'intermédiaire d'un routeur 12 de sortie du premier réseau 6 et réciproquement. Les paquets émis par les terminaux 20 et 22 vers un destinataire dans le deuxième réseau 2 de type IPv4 sont acheminés par l'intermédiaire du dispositif de traduction 10 et réciproquement. Les terminaux 20, 22, le premier réseau 6, le routeur de sortie 12 vers le troisième réseau 4 et le dispositif de traduction 10 vers le deuxième réseau 2 appartiennent à un système de communication 8.

Un tel dispositif de traduction 10 est par exemple un NAPT-PT, c'est-à-dire un "Network Address Port Translation + Protocol Translation", qui permet à plusieurs terminaux raccordés à un sous-réseau IPv6 de communiquer avec le deuxième réseau 2 IPv4 en utilisant une ou plusieurs adresses dans ce deuxième réseau et en s'appuyant sur les ports de la couche transport, TCP ou UDP, afin de différencier les adresses sources traduites. Par la suite, on appelle identifiant de session le numéro du port TCP ou UDP associé à la session.

On notera qu'à des fins de simplification, seuls deux terminaux ont été représentés sur la figure 3. Le procédé s'applique bien entendu à un nombre supérieur de terminaux.

Un paquet 50 émis par le terminal 20, 22, tel que représenté sur la figure 5, comprend différents champs d'information : un champ 52 comprenant des informations relatives à des données du protocole IPv6 (version, classe, Label, longueur, entête suivant, durée de vie), un champ 54 comprenant une adresse source, un champ 56 comprenant une adresse de destination et un champ 58 comprenant les données utiles. Le champ 54 est plus précisément représenté sur la figure 6. Pour le protocole IPv6, il est encodé sur cent vingt-huit bits. Il est composé de deux parties principales référencées 60 et 62 sur la figure 6. La première partie 60 correspond aux soixante-quatre premiers bits de l'adresse IPv6, connus sous le nom de préfixe, qui servent à identifier l'adresse de sous-réseau. La seconde partie 62 correspond aux soixante-quatre bits suivants, qui servent à identifier le terminal 20, 22 à l'intérieur du sous-réseau.

Selon un mode particulier de réalisation de l'invention, dans les bits réservés à la première partie 60, un sous-ensemble 66 de bits est prélevé dans l'ensemble 54 des bits réservés à l'encodage de l'adresse dans le premier réseau pour porter l'information identifiant un groupe d'identifiants de session susceptibles d'être associés à une session. L'adresse du terminal dans le sous-réseau est alors encodée sur le sous-ensemble 65 de bits restants.

A titre d'exemple, on peut prélever seize bits sur les soixante-quatre bits réservés pour le codage du préfixe. Les valeurs d'identifiants de session comprises entre 0 et 1024 sont des valeurs connues et pré-réservées par l'IANA (pour "Internet Assigned Numbers Authority"). Elles ne doivent donc pas être associées à une session. Par ailleurs, des observations montrent que, de manière générale, un terminal est susceptible d'initier au maximum une soixantaine de sessions simultanées. Si on réserve six bits sur les seize bits prélevés, un groupe d'identifiants de sessions contient alors soixante-quatre identifiants de session et on obtient alors un nombre de groupes d'identifiants de session de l'ordre de mille.

Les valeurs sont indiquées par la suite en notation hexadécimale. Si l'on représente un groupe d'identifiants de sessions sous la forme d'un intervalle de valeur, un premier groupe d'identifiants de sessions est [0400-043F], c'est-à-dire l'ensemble des valeurs comprises entre 0400 et 043F. Le deuxième groupe d'identifiants de sessions est [0440-047F] et ainsi de suite jusqu'au dernier groupe d'identifiants de sessions [FFCO-FFFF]. D'autres formes de constitution des groupes d'identifiants de sessions sont également possibles, par exemple une distribution séquentielle des identifiants de session dans les différents groupes.

L'information identifiant le groupe d'identifiants de session susceptibles d'être associés à la session peut consister en un des identifiants du groupe. Toujours à titre d'exemple, on indique dans le champ 66 la première valeur du groupe d'identifiants de sessions, soit 0440 pour [0440-047F]. Il est également possible de prendre la dernière valeur, ou toute autre valeur. Il s'agit d'une convention de notation.

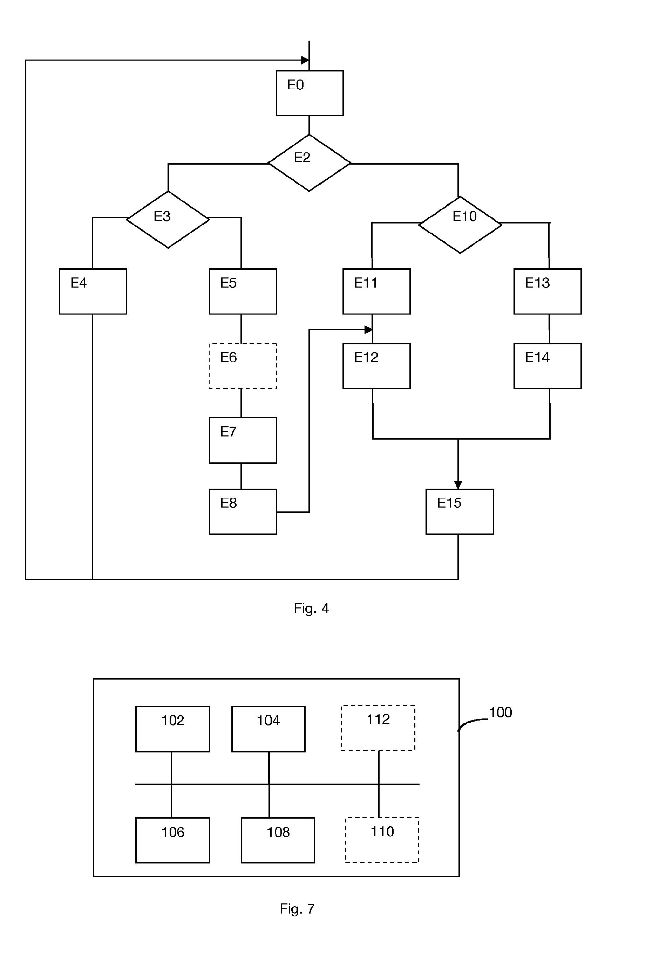

Le procédé de traduction, tel qu'il est mis en oeuvre par le dispositif de traduction 10 et selon un mode particulier de réalisation, va maintenant être décrit en relation avec la figure 4.

On se place dans l'état initial où une adresse IPv6 a été allouée au terminal 20. A titre d'exemple non limitatif, le préfixe 2001:0660:5001::/48 a été alloué au terminal 20 et le groupe d'identifiants de sessions [0440-047F] a été réservé. L'adresse IPv6 du terminal 20 dans le premier réseau 6 est alors 2001:0660:5001:0440::/64.

On se place également dans le cas particulier, où, en sortie du dispositif de traduction 10, une seule adresse dans le deuxième réseau est émise.

Dans une étape E0, le dispositif de traduction 10 est en attente de réception d'un paquet en provenance ou à destination du premier réseau 6.

Lors d'une première étape E2 de test, le dispositif de traduction 10 vérifie si le paquet reçu est un paquet initialisant une session.

Si le paquet reçu est un paquet initiant une session, dans une deuxième étape E3 de test, le dispositif de traduction 10 vérifie si le paquet reçu est en provenance du deuxième réseau 2. Si tel est le cas, dans une étape E4, le dispositif de traduction 10 ne traite pas le paquet et retourne à l'étape E0 en attente de réception d'un paquet.

Si le paquet reçu est en provenance du premier réseau 6, le paquet étant en outre un paquet initialisant une session, dans une étape E5 de détermination de l'identifiant de session à lui associer, le dispositif de traduction 10 obtient l'adresse du terminal dans le premier réseau, initiateur de la session. Il s'agit par exemple du terminal 20. Il détermine ensuite à partir de l'adresse dans le premier réseau du terminal obtenue, une information comprenant un groupe d'identifiants de sessions réservés pour le terminal 20 et donc susceptibles d'être associés à une session du terminal, à savoir le groupe [0440-047F]. Il sélectionne ensuite un identifiant de session à associer à la nouvelle session dans le groupe, qui n'est pas déjà affecté.

Ainsi, le dispositif de traduction sélectionne un identifiant de session par application d'une fonction de traduction. Cette fonction de traduction est une fonction injective qui permet d'associer à une adresse IP privée un unique couple (adresse IP publique, identifiant de session).

Dans une étape E7 d'association à la session, le dispositif de traduction 10 affecte à la session l'identifiant de session sélectionné et mémorise, dans une étape E8, cette affectation.

L'adresse dans le deuxième réseau 6 et l'identifiant de session ainsi déterminé permettent d'identifier de façon unique l'adresse du terminal dans le premier réseau 6.

Le procédé passe ensuite à une première étape E12 de traduction. Dans cette étape E12 de traduction d'entêtes de paquets relatifs à la session, le dispositif de traduction 10 traduit l'entête du paquet reçu en un deuxième entête comprenant l'adresse dans le deuxième réseau 6 et l'identifiant de session associés à la session. Par le terme "entête", on comprendra qu'il s'agit aussi bien des informations comprises dans l'entête IP du paquet, que d'informations comprises dans l'entête TCP ou UDP, l'identifiant de session étant compris notamment dans cette dernière.

Puis, dans une étape E15, le paquet ainsi traduit est transmis à destination du deuxième réseau 2. Le procédé retourne ensuite à l'étape E0 en attente de réception d'un paquet.

Si, à l'issue du test de l'étape E2, on a déterminé que le paquet reçu n'est pas un paquet initiant une session, dans une troisième étape de test E10, le dispositif de traduction 10 vérifie si le paquet reçu est en provenance du deuxième réseau 2.

Si tel est le cas, le paquet reçu est un paquet de type IPv4 et comprend une adresse dans le deuxième réseau 2 et un identifiant de session. Dans une étape E13, le dispositif de traduction 10 obtient à partir de l'identifiant de session l'adresse du terminal 20 dans le premier réseau 6. Puis, dans une deuxième étape E14 de traduction d'entêtes de paquets relatifs à la session, le dispositif de traduction 10 traduit l'entête du paquet reçu comprenant une adresse dans le deuxième réseau 2 et un identifiant de session en un deuxième entête comprenant l'adresse dans le premier réseau 6.

Puis, lors de l'étape E15, le paquet ainsi traduit est transmis à destination du premier réseau 6. Le procédé retourne ensuite à l'étape E0 en attente de réception d'un paquet.

Si, à l'issue de la troisième étape de test E10, on a déterminé que le paquet reçu est un paquet en provenance du premier réseau 6, le paquet reçu n'étant pas un paquet initiant une session, dans une étape E11, le dispositif de traduction 10 obtient à partir des informations relatives à la session mémorisées l'identifiant de session associé à cette session du terminal 20. Puis, le dispositif de traduction 10 passe à la première étape E12 de traduction d'entêtes de paquet relatifs à la session. A l'issue de cette étape de traduction, le dispositif de traduction 10 transmet le paquet traduit lors de l'étape E15 à destination du premier réseau 6. Le procédé retourne ensuite à l'étape E0 en attente de réception d'un paquet.

En variante, le dispositif de traduction 10 peut disposer de plusieurs adresses dans le deuxième réseau 2. Dans ce cas, à l'issue de l'étape E5, dans une étape E6, on détermine l'une d'entre elles en fonction d'une information déterminée associant à une adresse dans le premier réseau une adresse dans le deuxième réseau. Cette information peut être par exemple mémorisée dans une table statique de traduction, permettant d'associer à une adresse dans le premier réseau 6 une adresse dans le deuxième réseau 2. Le procédé continue ensuite comme décrit précédemment à l'étape E7.

Dans cette variante, l'adresse dans le deuxième réseau 6 et l'identifiant de session permettent également d'identifier de façon unique l'adresse du terminal dans le premier réseau 6.

On va maintenant décrire un dispositif de traduction 100 en relation avec la figure 7.

Le dispositif 100 de traduction d'entêtes de paquets relatifs à une session à laquelle participe un terminal, ledit terminal appartenant à un premier réseau et ayant une adresse dans ce premier réseau comprend :
- un module 102 de réception de paquets de données en provenance du premier réseau R1, 6 et à destination du deuxième réseau R2, 2, et réciproquement ;
- un module 104 d'émission de paquets à destination du premier réseau R1, 6 ou du deuxième réseau R2, 2 ;
- un module 106 de traduction d'entêtes de paquets relatifs à une session du terminal, agencé pour traduire un premier entête comprenant une adresse dans le premier réseau d'un terminal en un deuxième entête comprenant une adresse dans un deuxième réseau et un identifiant de session associés à la session, et réciproquement,
- un module 108 de détermination de l'identifiant de session à associer à une session du terminal à partir de l'adresse dans le premier réseau du terminal comprise dans un paquet initiant cette session, par application d'une fonction de traduction injective à l'adresse du terminal dans le premier réseau, l'adresse dans le deuxième réseau et l'identifiant de session ainsi déterminé permettant d'identifier de façon unique l'adresse du terminal dans le premier réseau.

Dans un mode de réalisation particulier, le module 108 est également agencé pour extraire la valeur des bits de poids fort ou de poids faible de l'adresse du terminal dans le premier réseau et pour appliquer la fonction de traduction aux bits de poids fort ou de poids faible ainsi extraits, afin de déterminer, un identifiant de session à utiliser lors de sessions avec un terminal distant relatives à l'application demandée.

Dans un autre mode de réalisation particulier, le dispositif 100 de traduction d'entêtes comprend :
- un module 112 de test, agencé pour déterminer si un paquet reçu est un paquet initiant une session et la provenance du paquet ;
- un module mémoire 110, agencé pour mémoriser une adresse dans le deuxième réseau 2 et un identifiant de session associés à une session.

Le module 106 de traduction est en outre agencé pour obtenir du module mémoire 110 un identifiant de session associé à une session.

Les modules 106, 108, 110 et 112 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif de traduction. L'invention concerne donc aussi :
- un programme pour un dispositif de traduction, comprenant des instructions de code de programme destinées à commander l'exécution des étapes du procédé précédemment décrit, lorsque ledit programme est exécuté par ledit dispositif ;
- un support d'enregistrement lisible par un dispositif de traduction sur lequel est enregistré le programme pour un dispositif de traduction.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Un tel dispositif peut être compris dans un équipement de réseau assurant une interconnexion entre au moins deux réseaux de télécommunication. Ainsi par exemple le dispositif 1 de traduction objet de l'invention est compris dans un multiplexeur numérique de lignes d'abonné ou DSLAM assurant l'interconnexion entre un réseau d'accès d'une part et un réseau de collecte d'autre part. Si le réseau d'accès est un réseau optique, le DSLAM est remplacé par une terminaison de ligne optique ou OLT.

Le dispositif 1 de traduction peut également être compris dans un routeur assurant une interconnexion entre le réseau de collecte et le réseau coeur.

L'invention concerne en outre un système de communication 8 comprenant un dispositif de traduction 1, 10, 100 tel que décrit précédemment et au moins un terminal 20,22.

## Revendications

1. Procédé de traduction d'entêtes de paquets relatifs à une session à laquelle participe un terminal (T1-T4, 20, 22) appartenant à un premier réseau (R1, 6), un premier entête comprenant une adresse dans le premier réseau du terminal étant traduit en un deuxième entête comprenant une adresse dans un deuxième réseau (R2, 2) et un identifiant de session associés à la session,
**caractérisé en ce que** ledit procédé comprend en outre :
- une étape (F4, E5) de détermination de l'identifiant de session à lui associer à partir de l'adresse dans le premier réseau du terminal, par application d'une fonction de traduction injective à l'adresse du terminal dans le premier réseau.

2. Procédé de traduction selon la revendication 1 dans lequel, l'adresse du terminal dans le premier réseau étant exprimée en langage binaire, l'identifiant de session est déterminé en fonction de la valeur de bits de poids faible de l'adresse du terminal dans le premier réseau.

3. Procédé de traduction selon la revendication 2 dans lequel la fonction de traduction associe à l'adresse du terminal dans le premier réseau un identifiant de session dont la valeur de bits de poids faible est identique à la valeur de bits de poids faible de l'adresse du terminal dans le premier réseau.

4. Procédé de traduction selon la revendication 2 dans lequel la fonction de traduction associe à l'adresse du terminal dans le premier réseau un identifiant de session dont la valeur de bits de poids fort est identique à la valeur de bits de poids faible de l'adresse du terminal dans le premier réseau.

5. Procédé de traduction selon la revendication 1, dans lequel l'étape de détermination de l'identifiant de session est effectuée sur réception d'un paquet initiant ladite session et, l'adresse du terminal dans le premier réseau comportant une information (66) identifiant un groupe d'identifiants de session susceptibles d'être associés à une session initiée par ledit terminal, l'identifiant de session à associer à la session considérée est sélectionné dans le groupe.

6. Procédé de traduction selon la revendication 5, dans lequel, le premier réseau est un réseau de type IPv6 et le deuxième réseau est un réseau de type IPv4.

7. Procédé de traduction selon la revendication 5, dans lequel un sous-ensemble (66) de bits est prélevé dans l'ensemble (54) des bits réservés à l'encodage de l'adresse dans le premier réseau, pour porter l'information identifiant le groupe d'identifiants de session susceptibles d'être associés à la session.

8. Procédé de traduction selon la revendication précédente, dans lequel l'information identifiant le groupe d'identifiants de session susceptibles d'être associés à la session consiste en l'un des identifiants du groupe.

9. Dispositif (1, 10, 100) de traduction d'entêtes de paquets relatifs à une session à laquelle participe un terminal appartenant à un premier réseau (R1, 6), le dispositif comprenant des moyens (106) de traduction d'entêtes de paquets relatifs à une session du terminal, agencés pour traduire un premier entête comprenant une adresse dans le premier réseau du terminal en un deuxième entête comprenant une adresse dans un deuxième réseau (R2, 2) et un identifiant de session associés à la session, et réciproquement,
**caractérisé en ce que** ledit dispositif comprend en outre :
- des moyens (108) de détermination de l'identifiant de session à associer à une session du terminal à partir de l'adresse dans le premier réseau du terminal, par application d'une fonction de traduction injective à l'adresse du terminal dans le premier réseau.

10. Equipement réalisant une interface entre un premier et un deuxième réseau de télécommunication,
**caractérisé en ce qu'**il comporte un dispositif de traduction d'entêtes de paquets transmis au cours d'une session à laquelle participe un terminal appartenant au premier réseau, le dispositif comprenant des moyens de traduction d'un premier entête comprenant une adresse du terminal dans le premier réseau en un deuxième entête comprenant une adresse dans le deuxième réseau et un identifiant de session, et des moyens de détermination de l'identifiant de session par application à l'adresse du terminal dans le premier réseau d'une fonction de traduction injective.

11. Système de communication (8) comprenant un dispositif (1, 10, 100) de traduction selon la revendication 9 et au moins un terminal (T1-T4, 20, 22).

12. Programme d'ordinateur, **caractérisé en ce qu'**il comprend des instructions de code de programme pour la mise en oeuvre des étapes du procédé de traduction selon la revendication 1 lorsque le programme est exécuté par un processeur.

13. Support d'enregistrement lisible par un dispositif de traduction sur lequel est enregistré le programme selon la revendication 12.

14. Signal émis par un terminal appartenant à un premier réseau vers un destinataire dans un deuxième réseau et véhiculant un paquet (50) comprenant une adresse (54) du terminal dans le premier réseau, ladite adresse portant une information (66) identifiant un groupe d'identifiants de session susceptibles d'être associés à une session initiée par ledit terminal et apte à être utilisée par un dispositif de traduction pour sélectionner dans le groupe, lors de l'initialisation d'une session, un identifiant de session à associer à la session.
